# EUROPÄISCHE PATENTSCHRIFT

(11) **EP 0 714 592 B1**
(45) Veröffentlichungstag und Bekanntmachung des Hinweises auf die Patenterteilung: **05.08.1998**
(21) Anmeldenummer: 96100800.0
(22) Anmeldetag: 09.11.1990
(51) Int. Cl.: A01B 63/111, A01B 63/114

(54) **Steuersystem zur Lageeinstellung von Anhängevorrichtungen**
Control system for the position adjustment of coupling devices
Système de commande pour le réglage de position de dispositifs d'attelage

(30) Priorität: 13.11.1989 US 435861
(43) Veröffentlichungstag der Anmeldung: 05.06.1996
(62) Teilanmeldung aus: 93118410.5
(73) Patentinhaber: DEERE & COMPANY, Moline Illinois 61265-8098 (US)
(72) Erfinder: Boe, Thomas Eugene, Cedar Falls, Iowa 50613 (US); Dharia, Vijay Manilal, Cedar Falls, Iowa 50613 (US); Easton, David Joseph, Cedar Falls, Iowa 50613 (US)
(74) Vertreter: Feldmann, Bernhard

(56) Entgegenhaltungen:
- EP-A- 0 153 102
- EP-A- 0 251 529
- DE-A- 3 316 305
- DE-B- 1 198 103
- FR-A- 2 568 087
- GB-A- 1 124 413
- US-A- 4 133 993
- US-A- 4 503 916
- US-A- 4 508 176
- US-A- 4 518 044
- US-A- 4 529 039
- US-A- 4 837 691
- LANDBOUWMECHANISATIE, Bd. 38, Nr. 9, September 1987, WAGENINGEN, NL, Seiten 942-943, XP000567318 T.C. RADEMAKER: "Een elektronisch gestuurde hefinrichting"

## Beschreibung

Die Erfindung betrifft ein Steuersystem zur Einstellung der Lage einer Anhängevorrichtung, insbesondere eines Schleppers. Es soll beispielsweise die Arbeitstiefe eines an dem Schlepper befestigten Arbeitsgerätes in Abhängigkeit verschiedener erfaßter und von einer Bedienungsperson einstellbarer Parameter gesteuert werden. Das Steuersystem enthält Betätigungsmittel zum Anheben und Absenken der Anhängevorrichtung, einen Sensor zur Erfassung eines Lageistwertes der Anhängevorrichtung, eine durch eine Bedienungsperson einstellbare Bedienungseinrichtung zur Einstellung eines Lagesollwertes für die Anhängevorrichtung, einen durch eine Bedienungsperson einstellbaren Eingabeschalter und eine Steuereinheit. Die Steuereinheit, beispielsweise eine elektronische Steuereinheit oder ein Mikroprozessor, steuert die Lage der Betätigungsmittel in Abhängigkeit wenigstens des Lagesollwertes, des Lageistwertes und der Einstellung des Eingabeschalters, wobei sich durch Einstellung der Bedienungseinrichtung eine Vielzahl erwünschter Arbeitspositionen der Anhängevorrichtung einstellen läßt. Bei einer bestimmten Betätigung des Eingabeschalters läßt sich die Anhängevorrichtung nur in eine Grenzlage bringen. Ein derartiges Steuersystem ist durch die DE-A-33 16 305 bekannt.

Es wurden verschiedene elektrohydraulische Steuersysteme für Anhängevorrichtungen entwickelt und gebaut beziehungsweise vorgeschlagen. Ferner wurden verschiedene Versuche unternommen, um die Leistungsfähigkeit derartiger Steuersysteme durch Verwendung von Elektronik und/oder Mikroprozessoren zu verbessern (siehe z. B. US-PS 4,508,176, US-PS 4,518,004, US-PS 4,503,916 und US-PS 4,837,691). Bei Systemen, die Elektronik verwenden, wurden diese jedoch wegen der damit verbundenen Komplexität der von der Bedienungsperson durchzuführenden Steuerbefehle nicht vollständig nutzbar gemacht.

Ein durch einen John Deere Traktor bekanntes Steuersystem für Anhängevorrichtungen enthält einen Hubwellenbedienungshebel, durch dessen Bewegung sich die Anhängevorrichtung unter bestimmten Bedingungen heben und senken und sich die Arbeitstiefe des Arbeitsgerätes einstellen läßt. Dieses bekannte System enthält auch einen Hebe/Senk-Umschalter, der in der Kabine befestigt ist. Befindet sich dieser Schalter in seiner "unteren" Lage, so regelt das Steuersystem die Arbeitsgerätetiefe bei einem Wert ein, der der durch den Bedienungshebel eingestellten Arbeitstiefe entspricht. Das Steuersystem spricht damit auf Änderungen der Einstellung des Bedienungshebels an. Befindet sich der Hebe/Senk-Umschalter in seiner "oberen" Lage, so hat die Einstellung des Bedienungshebels keinen Einfluß auf die Steuerung, und die Anhängevorrichtung sowie das Arbeitsgerät werden in die äußerste obere Lage bewegt. Liegt in einem solchen System ein Ausfall des Bedienungshebelwandlers vor, so blockiert das Steuersystem die Anhängevorrichtung und mit ihm das Arbeitsgerät in der gegenwärtigen Lage. Liegt ein Ausfall des die Lage der Anhängevorrichtung erfassenden Rückkopplungspotentiometers vor, dann wird durch Einstellung des Umschalters in seine "obere" Lage die Anhängevorrichtung veranlaßt, sich in die äußerste obere Lage zu bewegen, und durch Einstellung des Umschalters in die "untere" Lage wird die Anhängevorrichtung veranlaßt, sich in die äußerste untere Lage zu bewegen. Diese bekannte Steuervorrichtung enthält ferner einen außerhalb der Kabine befestigten Schalter an der Rückseite des Schleppers, in der Nähe der Anhängevorrichtung. Dieser äußere Schalter kann betätigt werden, um die Anhängevorrichtung auf eine beliebige, von der Bedienungsperson gewünschte Lage anzuheben oder abzusenken. Der in der Kabine befindliche Umschalter hat zwei als Rastlagen ausgebildete Schaltstellungen. Der äußere Schalter ist ein Schalter mit drei Lagen, der durch eine Feder in seine mittlere Lage vorgespannt ist.

Ein weiteres bei Ackerschleppern verwendbares Steuersystem für eine Anhängevorrichtung enthält einen Hubwellensteuerknopf, durch welchen die Arbeitstiefe des Arbeitsgerätes eingestellt wird, sowie einen in jede seiner drei Lagen einrastbaren Hebe/Senk-Schalter mit einer Hebe-, einer Senk- und einer neutralen Lage. Dieses System arbeitet ähnlich wie das oben beschriebene, sofern sich der Hebe/Senk-Schalter in seiner Hebe- oder Senklage befindet. Befindet sich der Hebe/ Senk-Schalter jedoch in seiner neutralen, mittleren Lage, so ist das Steuersystem arbeitsunfähig, eine Bewegung der Anhängevorrichtung wird unterdrückt und das System spricht nicht auf Bewegungen des Hubwellensteuerknopfes an.

In beiden genannten Steuersystemen sind die Hebe/Senk-Schalter Rastschalter, die in der eingestellten Lage so lange verbleiben, bis sie absichtlich aus dieser Lage heraus bewegt werden. Mit jeder dieser beiden Steuersysteme ist eine fehlerfreie Kombination der Steuereinstellungen erforderlich, um die Anhängevorrichtung durch den Steuerhebel oder -knopf in eine gewünschte Lage zu heben oder abzusenken. Der Hebe/Senk-Schalter muß sich in seiner "unteren" Lage befinden, andernfalls ist eine Regelung aufgrund der Lage des Steuerhebels nicht wirksam. Ein Ausfall dieses Schalters in der "oberen" Lage kann den Steuerhebel unwirksam machen. Es ist wünschenswert, ein Steuersystem für eine Anhängevorrichtung bereitzustellen, welches weniger Eingriffe durch die Bedienungsperson erfordert und welches weitere, durch die Elektronik ermöglichte Funktionsvorteile aufweist.

Die mit der Erfindung zu lösende Aufgabe wird darin gesehen, ein Steuersystem für eine Anhängevorrichtung der eingangs genannten Art mit vereinfachten, durch eine Bedienungsperson betätigbaren Steuereinrichtungen anzugeben, welches insbesondere durch Verwendung eines Mikroprozessors eine verbesserte Funktionsweise aufweist. Eine überraschende, nicht gewollte Bewegung der Anhängevorrichtung soll vermieden werden. Bei bestimmten Ausfall - bedingungen soll das Arbeitsgerät durch entsprechende Handhabung des in der Kabine befestigten Hebe/Senk-Schalters in eine beliebige Arbeitstiefe bewegbar sein.

Die Aufgabe wird erfindungsgemäß durch die Merkmale des Patentanspruchs 1 gelöst.

Für den Fall, daß der Bedienungshebelwandler und/oder der Lagesensor der Anhängevorrichtung ausfällt (beispielsweise durch einen Kurzschluß oder eine Leitungsunterbrechung), enthält das erfindungsgemäße Steuersystem eine Ausfall-Betriebsart, durch die eine Verstellung der Anhängevorrichtung möglich bleibt. Obwohl in diesem Fall die Anhängevorrichtung sich nicht durch den Bedienungshebel verstellen läßt, kann sie in eine beliebige gewünschte Arbeitslage angehoben und abgesenkt werden, indem ein Eingabeschalter, insbesondere ein Wippschalter, nach oben beziehungsweise unten gedrückt wird. Diese Bewegung der Anhängevorrichtung wird beendet, wenn der Eingabeschalter losgelassen wird.

Gemäß einer vorteilhaften Weiterbildung der Erfindung ist der Eingabeschalter ein federzentrierter Schalter mit wenigstens folgenden drei Stellungen: eine Hebestellung, die einem Anhebebetrieb zugeordnet ist, eine Arbeitsstellung, die einem gesteuerten Bodenbearbeitungsbetrieb zugeordnet ist, und eine neutrale (mittlere) Stellung, die der Schalter aufgrund der Federkraft einnimmt, sofern er nicht betätigt wird. Ein derartiger Wippschalter wurde in der früheren europäischen Patentanmeldung Nr. 90121448.6 näher beschrieben.

Je nach Anordnung und Art des Schalters kann die erste Stellung eine obere und die zweite Stellung eine untere Stellung sein. Diese Zuordnung wird im folgenden häufig verwendet, da sie gleichzeitig charakteristisch für die bezweckte Funktionsweise ist.

Neben seiner Funktion als Ausfall-Betriebsart-Schalter zu dienen, kann der Eingabeschalter auch für andere Zwecke herangezogen werden, wie dies im einzelnen in den früheren europäischen Patentanmeldungen Nr. 90121448.6 und Nr. 93118410.5 näher beschrieben wurde.

Beispielsweise kann das Steuersystem ein Löschmerkmal enthalten, durch das ein Ansprechen des Steuersystems auf eine frühere, zeitweise Betätigung des Eingabeschalters in eine erste Lage unterdrückt wird, sofern der Eingabeschalter innerhalb eines bestimmten Zeitintervalls nach dieser Betätigung in eine zweite Lage gebracht wird. Handelt es sich bei dem Eingabeschalter beispielsweise um einen Wippschalter, so wird die Wirkung (Steuerbefehle) einer vorübergehenden Auslenkung des Wippschalters in eine seiner instabilen Stellungen aufgehoben, sofern innerhalb einer bestimmten Zeitspanne, beispielsweise zwei Sekunden, eine nachfolgende Bewegung des Wippschalters in die andere instabile Stellung erfolgt. Ferner wird in diesem Fall die Anhängevorrichtung in ihrer derzeitigen Lage gehalten und die Lageregelung unterdrückt.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: die vereinfachte Darstellung eines landwirtschaftlichen Schleppers, der mit einem Steuersystem zur Einstellung der Lage einer Anhängevorrichtung gemäß der vorliegenden Erfindung versehen ist,
- Fig. 2: das elektrische und hydraulische schematische Diagramm eines Steuersystems für eine Anhängevorrichtung gemäß vorliegender Erfindung,
- Fig. 3a - 3l: Flußdiagramme des Algorithmus, der von dem in Figur 2 dargestellten Mikroprozessor ausgeführt wird und
- Fig. 4: die Teilansicht der elektrischen Schaltung eines in der Fahrzeugkabine angeordneten Wippschalters mit Zentrierfedern.

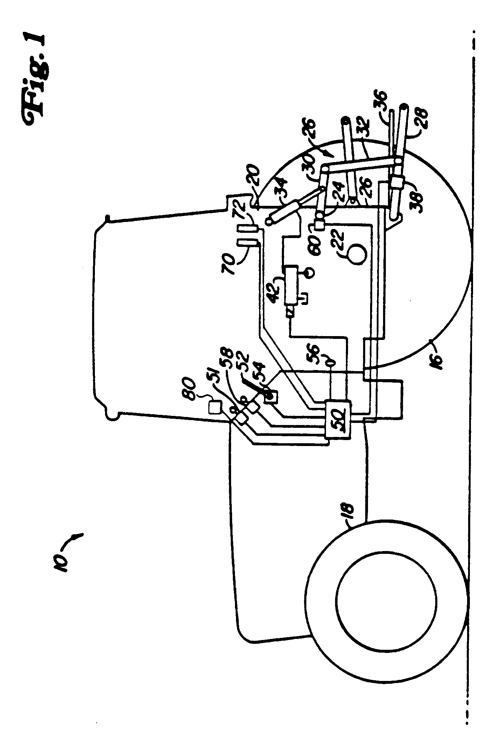

Aus Fig. 1 geht ein Schlepper 10 hervor, dessen rückwärtiges Gehäuse 20 eine Hinterradachse 22 und eine Hubwelle 24 trägt. Eine Geräteanhängevorrichtung 26, wie beispielsweise eine übliche Drei-Punkt-Anhängevorrichtung, enthält Unterlenker 28 als Zugglieder, die über Hubspindeln 32 mit Hubarmen 30 verbunden sind. Die Hubarme 30 ihrerseits sind mit der Hubwelle 24 so verbunden, daß sie eine gleichzeitige und gleiche Bewegung sicherstellen und durch zwei parallel befestigte hydraulische Hubwellenzylinder 34 angehoben und abgesenkt werden können. Eine Zugstange 36 erstreckt sich nach hinten über das Gehäuse 20 hinaus. Der Schlepper 10 und die Anhängevorrichtung 26 sind nur beispielhaft angegeben. Dem Fachmann ist ersichtlich, daß die Erfindung auch bei Schleppern und Anhängevorrichtungen anderer Ausbildung verwendet werden kann. Beispielsweise kann die vorliegende Erfindung bei einem gelenkigen vierradangetriebenen Schlepper, bei einem vorderradangetriebenen Breitspurschlepper oder bei einer vorne montierten Anhängevorrichtung verwendet werden.

Ein anbaufähiges Bodenbearbeitungsgerät (nicht gezeigt), wie zum Beispiel ein Scharpflug oder ein Meißelpflug, kann in üblicher Weise an den Unterlenkern 28 befestigt sein. Alternativ dazu kann ein Schleppgerät (nicht gezeigt) an die Zugstange 36 angekuppelt sein. Ein Zugkraftsensor 38 ist in ein nicht gezeigtes Verbindungsstück zwischengeschaltet, welches an Stelle des hydraulischen Zugkraftfühlzylinders eines üblichen hydromechanischen Anhängesystems eingesetzt ist, um die Zugkraft zu erfassen, die von dem anbaufähigen Arbeitsgerät auf die Unterlenker 28 übertragen wird. Alternativ hierzu können gesonderte linke und rechte Zugkraftsensoren in den linken und rechten Unterlenkern 28 eingesetzt werden, deren Signale elektronisch zusammengefaßt oder gemittelt werden. Im Falle eines Schleppgerätes kann die Zugkraft durch einen Zugkraftsensor erfaßt werden, der in der Zugstange 36 zwischengeschaltet ist, oder sich in einem T-Stück befindet, das die Zugglieder verbindet. In beiden Fällen kann ein geeigneter bekannter Zugkraftsensor verwendet werden, wie beispielsweise das Model GZ-10, das durch Revere Corporation of America hergestellt wird.

Der Hydraulikflüssigkeitsstrom zu und von dem Zylinder 34 oder zu und von einem entfernt liegenden, nicht dargestellten Zylinder auf einem geschleppten oder halb-anbaufähigen Arbeitsgerät wird durch ein Paar magnetisch betätigbarer elektrohydraulischer Durchflußsteuerventile 42a und 42b gesteuert, welche elektrische Steuersignale empfangen, die durch die Steuereinheit 50 erzeugt werden. Bei den Durchflußsteuerventilen 42 kann es sich um solche handeln, wie sie in der US-PS 4,799,645 beschrieben wurden, auf deren Offenbarung Bezug genommen wird.

Ein durch eine Bedienungsperson einstellbarer Bedienungshebel 52 (oder Bedienungsknopf) steht mit einem Hebelstellungswandler 54 (beispielsweise einem Potentiometer) in Verbindung, welcher ein Führungssignal erzeugt, das einer gewünschten Lage der Anhängevorrichtung oder einer gewünschten Zuglast oder in Abhängigkeit eines Last/Tiefe- oder Mischregelungspotentiometers 56 einer Kombination von beiden entspricht. Ein elektrisches Signal, das einer oberen Grenzlage entspricht, wird durch ein durch eine Bedienungsperson einstellbares Potentiometer 51 geliefert. Der Hebel 52 ist innerhalb eines nicht gezeigten Schlitzes verschiebbar. Die Enden dieses Schlitzes wirken als untere bzw. obere mechanische Anschläge, welche die Lage des Bedienungshebels mechanisch begrenzen und damit das Signal des Potentiometers 54 limitieren. Es ist auch ein durch eine Bedienungsperson einstellbares Senkgeschwindigkeits-Potentiometer 58 vorgesehen.

Ein Lagewandler 60, zum Beispiel ein übliches Drehpotentiometer, erzeugt ein Lagesignal, welches die tatsächlich erfaßte Lage der Hubwelle 24 wiedergibt. Ein Lagerückführungssignal könnte auch von dem Hubwellenzylinder 34 oder von einem entfernt liegenden Hubzylinder erhalten werden, wenn der betreffende Zylinder einen Stellungswandler enthält, wie er beispielsweise in der US-PS 3,726,191 beschrieben ist.

Ferner kann eine zweipolige Hebe/Senk-Doppelweiche 70 außerhalb der Schlepperkabine in der Nähe der Anhängevorrichtung 26 befestigt sein, so daß eine Bedienungsperson von außerhalb der Schlepperkabine aus die Anhängevorrichtung heben und senken kann. Ein Eichschalter 72 ist innerhalb der Schlepperkabine befestigt; er ist jedoch nicht Gegenstand der vorliegenden Erfindung.

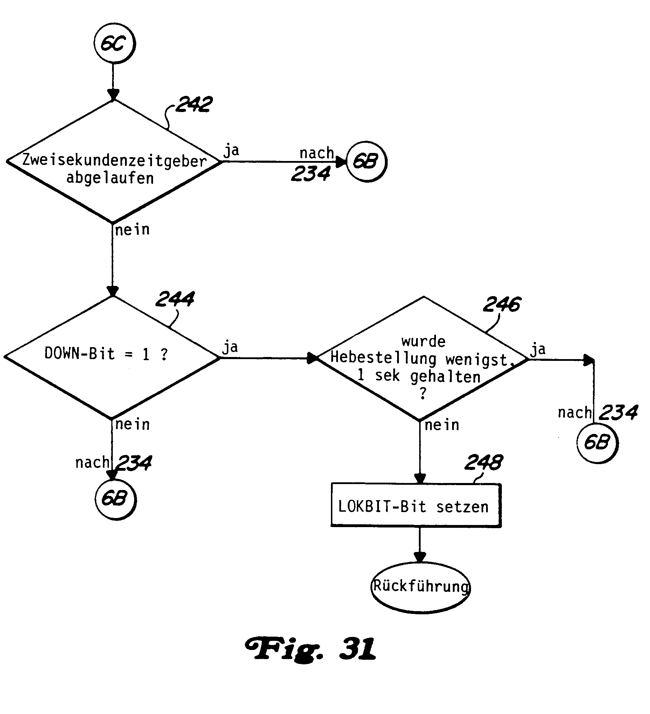

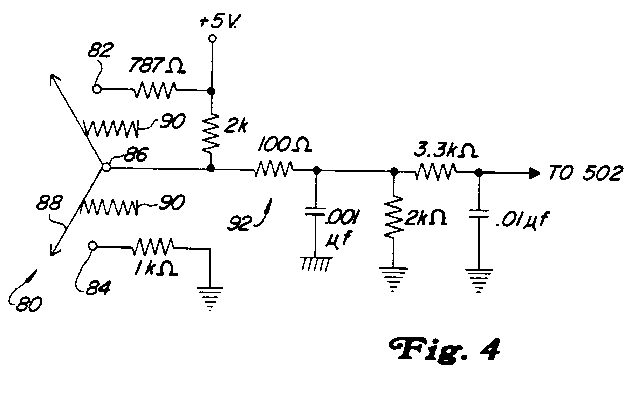

Das Steuersystem umfaßt ferner einen in der Kabine befestigten Hebe/Senk-Schalter 80, der als federzentrierter Dreipositionen-Wippschalter 80 ausgebildet sein kann, wie er aus Fig. 4 hervorgeht. Dieser enthält einen Hebeanschluß 82, einen Senkanschluß 84, einen gemeinsamen oder neutralen Anschluß 86 und ein kippbares Kontaktelement 88. Ein Paar von Zentrierfedern 90 bringt das Kontaktelement 88 zurück in seine mittlere Lage, in welcher es im Abstand zu dem Hebeanschluß 82 und dem Senkanschluß 84 liegt, sofern es nicht manuell in Kontakt mit einem der beiden Anschlüsse 82 oder 84 gehalten wird. Der Senkanschluß 84 ist über einen Widerstand geerdet. Der Hebeanschluß 82 und der gemeinsame Anschluß 86 stehen mit einer Spannungsquelle und einem A/D-Wandler 502 (Analog-Digital-Wandler) über einen aus Impedanzen gebildeten Kettenleiter 92 derart in Verbindung, daß die Spannung, die von dem Schalter 80 auf den A/D-Wandler 502 übertragen wird, kennzeichnend für die Lage des Schalters 80 ist.

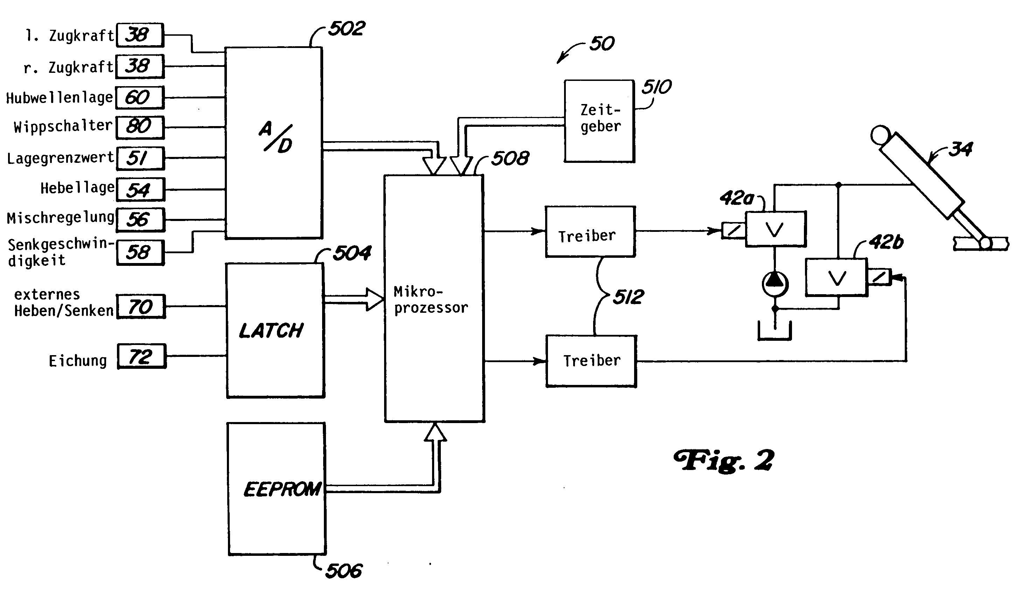

Gemäß Fig. 2 enthält die Steuereinheit 50 vorzugsweise einen Analog-Digital-Wandler 502, ein selbsthaltendes Schaltglied (Latch) 504, einen elektrisch löschbaren, programmierbaren Festwertspeicher (EEPROM) 506, einen Mikroprozessor 508 mit einem Zeitgeber 510 und einem Paar Ventilansteuerungen 512. Bei den Ventilansteuerungen 512 kann es sich um konventionelle impulsdauermodulierte Ventilstromtreiber handeln. Es sind jedoch vorzugsweise solche, wie sie in der US-PS 4,964,014 beschrieben sind. Die Analogsignale der Sensoren 38 bzw. Potentiometer 51, 54, 56, 58 und 60 und des Schalters 80 sind mit dem Mikroprozessor 508 über den A/D-Wandler 502 verbunden. Das selbsthaltende Schaltglied 504 verbindet den externen Hebe-/Senk-Schalter 70 und den Eichschalter 72 mit dem Mikroprozessor 508. Im EEPROM 506 sind die Eichdaten gespeichert, die in einem Eichverfahren verwendet werden.

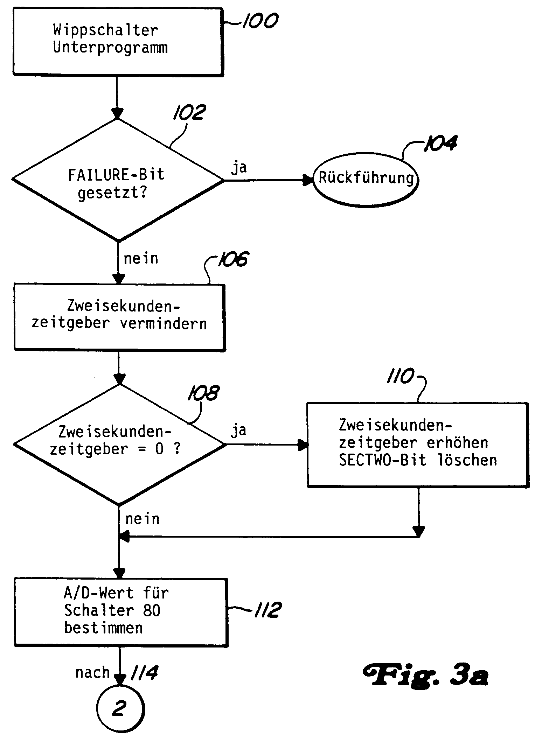

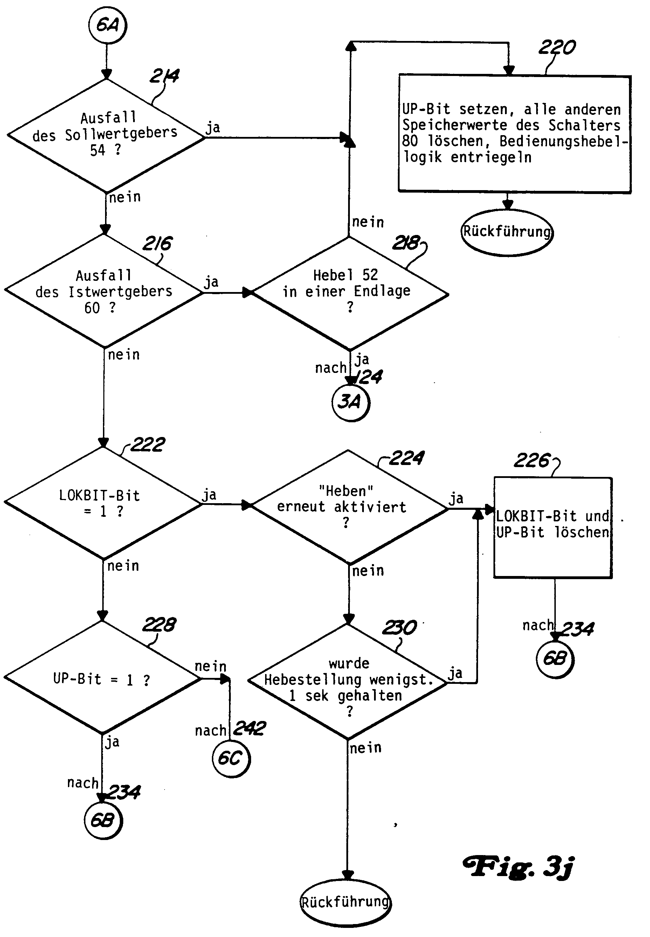

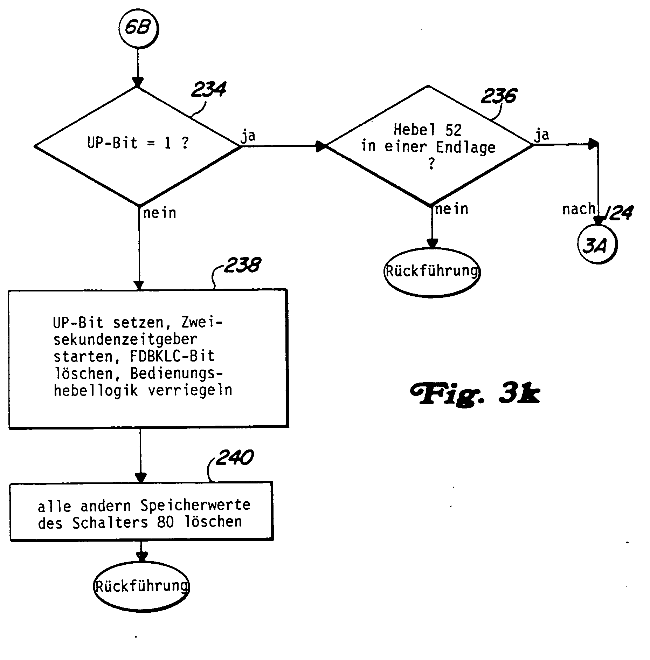

Durch die Steuereinheit 50 wird periodisch ein Wippschalter-Unterprogramm, wie es aus den logischen Flußdiagrammen der Figuren 3a bis 3l hervorgeht, durchgeführt. Die Steuereinheit 50 führt vorzugsweise einen Verriegelungsalgorithmus, wie er in der US-PS 4,837,691 beschrieben ist, und ein Hauptsteuerprogramm für die Anhängevorrichtung aus, wie es in der US-PS 4,518,044 beschrieben ist. Auf beide Patentschriften wird hinsichtlich deren Offenbarung Bezug genommen. Gemäß vorliegendem Ausführungsbeispiel führt die Steuereinheit 50 das Wippschalter-Unterprogramm jedesmal aus, wenn das Hauptprogramm durchgeführt wird.

Das Unterprogramm für einen Wippschalter mit drei Stellungen wird mit Schritt 100 jedesmal gestartet, wenn das Hauptprogramm ausgelöst wird. Wurde ein FAILURE-Bit vorher gesetzt, um einen Ausfallzustand des Wippschalters 80 anzuzeigen, stellt Schritt 102 den Algorithmus über Schritt 104 zurück auf das Hauptprogramm. Wurde das FAILURE-Bit nicht gesetzt, wird der Algorithmus mit den Schritten 106 bis 110 fortgesetzt. Schritt 106 stellt einen Zweisekundenzeitgeber schrittweise zurück. Durch die Schritte 108 und 110 wird ein Zweisekundenzeitgeber-Bit (SECTWO-Bit) gelöscht, d. h. auf Null gesetzt oder freigegeben, wenn der Zweisekundenzeitgeber abgelaufen war. Andernfalls richtet Schritt 108 den Algorithmus auf Schritt 112, welcher den Stromzustand des Wippschalters 80 als einen A/D-Wert bestimmt und speichert und den Algorithmus zu Schritt 114 führt.

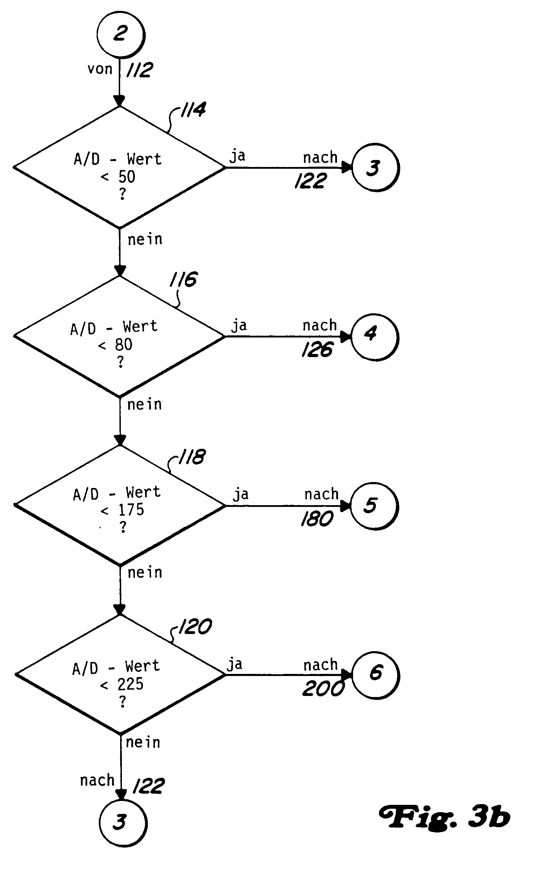

In den Schritten 114 bis 120 (Fig. 3b) wird dieser A/D-Wert mit einer Reihe von Bezugswerten verglichen, um die Stellung des Stromwippschalters 80 zu bestimmen und um festzustellen, ob ein Fehlerzustand aufgetreten ist. Beispielsweise lenkt Schritt 114 den Algorithmus zu Schritt 122, wenn ein Fehlerzustand aufgrund eines geerdeten Anschlusses auftritt. Schritt 116 lenkt den Algorithmus auf Schritt 126, wenn der Wippschalter 80 sich jetzt in der unteren Stellung befindet. Schritt 118 lenkt den Algorithmus auf Schritt 180, wenn der Wippschalter 80 sich jetzt in der mittleren Stellung befindet. Schritt 120 lenkt den Algorithmus auf Schritt 200, wenn der Wippschalter 80 sich jetzt in der oberen Stellung befindet. Schließlich lenkt Schritt 120 den Algorithmus auf Schritt 122, wenn einer der Schalteranschlüsse einen Fehlerzustand aufgrund einer hohen Spannung (offener Stromkreis) aufweist. Der Algorithmus wird mit Schritt 122 fortgesetzt, sofern ein solcher Fehlerzustand aufgetreten ist.

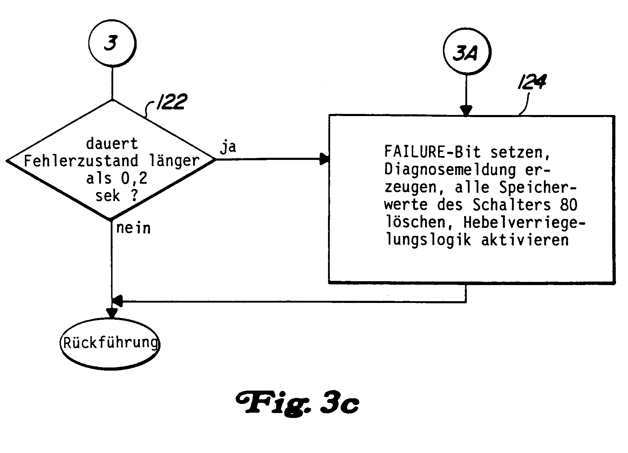

Aus Fig. 3c ist ersichtlich, daß Schritt 122 den Algorithmus auf Schritt 124 lenkt, wenn der in Schritt 122 ermittelte Fehlerzustand länger als 0,2 Sekunden anhält. Hält der Fehlerzustand höchstens 0,2 Sekunden an, so bewirkt Schritt 122 eine Rückführung zum Hauptprogramm. Schritt 124 setzt ein FAILURE-Bit, das einen schwerwiegenden Fehler zum Inhalt hat, erzeugt eine Diagnosemeldung, löscht alle Speicherinhalte, die den Betriebszustand des Wippschalters 80 betreffen und macht eine Hebelverriegelungslogik wirksam.

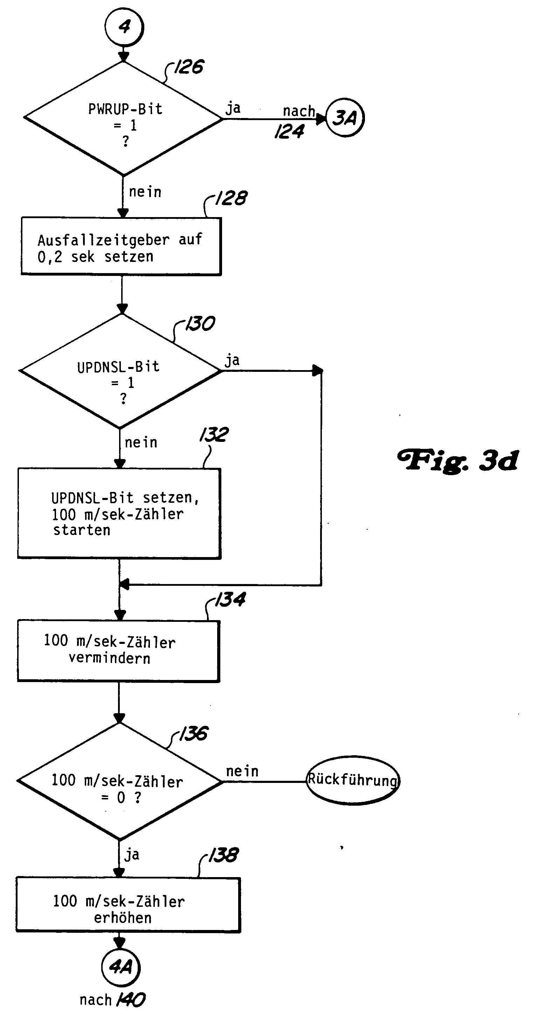

Gemäß Fig. 3d lenkt Schritt 126, welcher erreicht wird, wenn der Wippschalter 80 sich in seiner unteren Stellung befindet, den Algorithmus auf die Ausfallzustandslogik des Schrittes 124, sofern ein Inbetriebnahme-Bit (PWRUP-Bit) gleich 1 gesetzt war, wodurch angezeigt wird, daß der Wippschalter 80 sich in der unteren Stellung befunden hat, als das System eingeschaltet und an Leistung angelegt wurde. War das PWRUP-Bit nicht gleich 1 gesetzt, dann richtet Schritt 126 den Algorithmus auf Schritt 128, welcher einen Ausfallzeitgeber für 0,2 Sekunden setzt. Hierdurch wird der in Schritt 122 verwendete Fehlerzeitgeber zurückgesetzt. Dann wird durch die Schritte 130 und 132 ein UPDNSL-Bit gesetzt und ein Zähler auf ein Zeitintervall von 100 Millisekunden eingestellt, wenn zum ersten Mal während des Algorithmusses der Wippschalter 80 sich in der unteren Stellung befunden hat. Durch die Schritte 134 und 136 wird der Algorithmus zum Hauptprogramm zurückgeführt, wenn der Wippschalter 80 nicht für wenigstens 100 Millisekunden in seiner unteren Stellung gehalten wurde. Ist der Wippschalter 80 in seiner unteren Stellung für wenigstens 100 Millisekunden verblieben, richtet Schritt 136 den Algorithmus auf Schritt 138, durch den der 100-Millisekunden-Zähler erhöht und der Algorithmus auf Schritt 140 gerichtet wird.

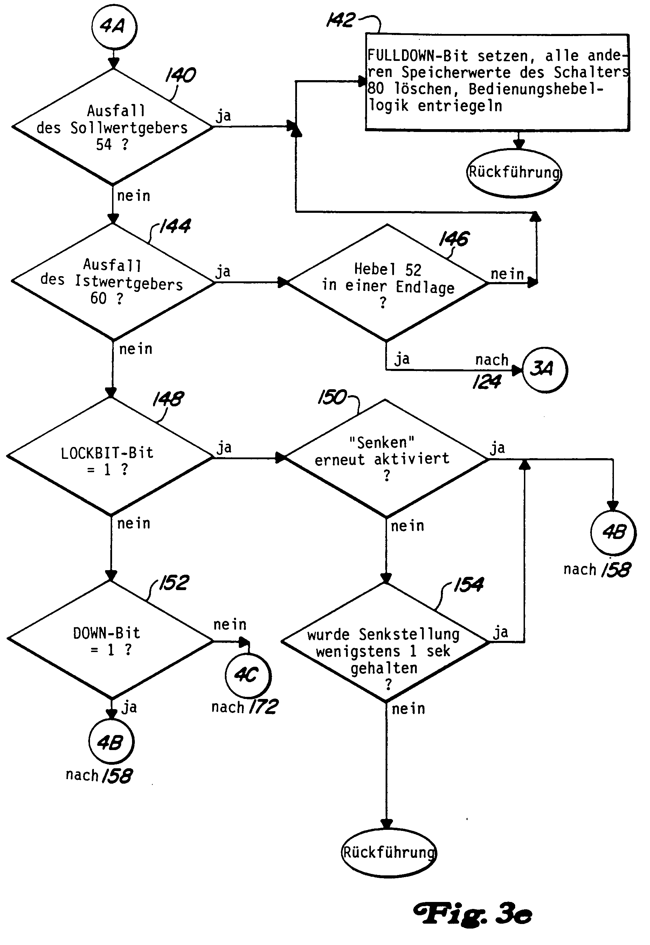

Gemäß Fig. 3e richtet Schritt 140 den Algorithmus auf Schritt 142, sofern der Hebelstellungswandler 54 des Bedienungshebels 52 ausgefallen ist. Die Schritte 144 und 146 richten den Algorithmus auf Schritt 142, wenn der Lagewandler 60 ausgefallen ist und der Bedienungshebel 52 nicht in eine der beiden Endlagen bewegt wurde. Schritt 142 setzt ein FULLDOWN-Bit, gibt die anderen Betriebsarten des Wippschalters 80 frei und entriegelt die Bedienungshebellogik (oder macht die Hebelverriegelungslogik unwirksam) und führt dann die Steuerung zu dem Hauptprogramm zurück. Stellt Schritt 146 fest, daß der Hebel 52 zu einer der beiden Endlagen bewegt wurde, dann richtet Schritt 146 den Algorithmus auf die Ausfallogik des Schrittes 124. Lag weder ein Ausfall des Hebelstellungswandlers 54 noch einer des Rückführpotentiometers 60 vor, dann schreitet der Algorithmus von Schritt 144 zu Schritt 148 weiter. Schritt 148 ermittelt, ob das Löschmerkmal vorher durch Setzen eines LOKBIT-Wertes aufgerufen wurde. Wurde das Löschmerkmal aufgerufen, richtet Schritt 148 den Algorithmus auf Schritt 150. Schritt 150 richtet den Algorithmus auf Schritt 158, wenn dies das zweite Mal ist, daß der Schalter 80 in die (untere) Senkstellung gebracht wurde. Andernfalls richtet Schritt 150 den Algorithmus auf Schritt 154. Schritt 154 richtet den Algorithmus auf Schritt 158, wenn der Wippschalter 80 in seiner Senkstellung länger als für eine Sekunde gehalten wird. Andernfalls kehrt der Algorithmus zum Hauptprogramm zurück. Zurückkehrend zu Schritt 148 ist festzustellen, daß wenn das Löschmerkmal (LOKBIT-Bit) nicht aufgerufen war, Schritt 148 den Algorithmus auf Schritt 152 lenkt. Schritt 152 bestimmt, ob ein Senkmodus gewählt war, indem er den Wert eines DOWN-Bits prüft. War ein Senkmodus ausgewählt, richtet Schritt 152 den Algorithmus auf Schritt 158. War der Senkmodus nicht ausgewählt, richtet Schritt 152 den Algorithmus auf Schritt 172.

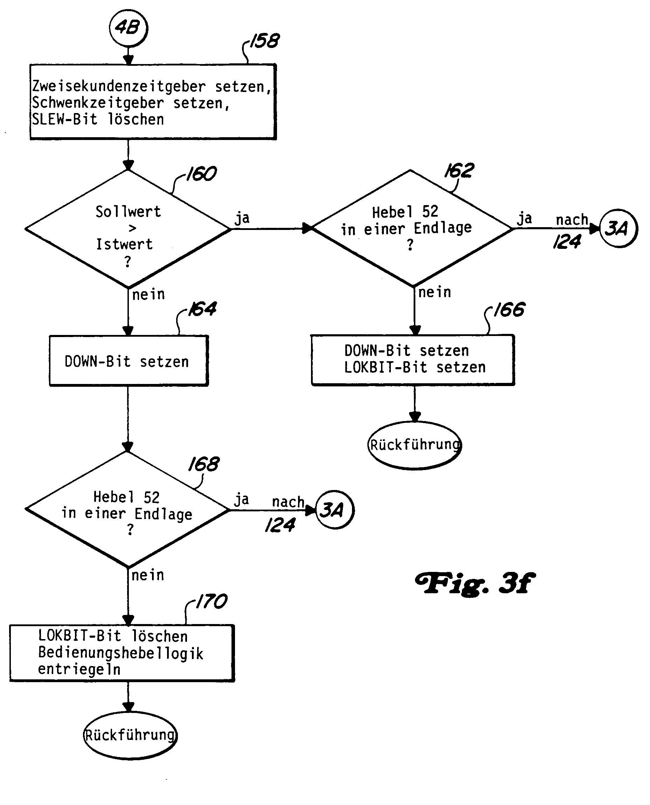

Bezugnehmend auf Fig. 3f tritt der Algorithmus in Schritt 158 ein, wenn der Wippschalter 80 sich in seiner unteren Stellung befindet und diese untere Stellung bereits durch ein früheres Setzen des DOWN-Bits ausgewählt war, wie es in den Schritten 164 und 166 erfolgt, oder wenn ein Löschmerkmal gemäß den Schritten 148, 150 und 154 abgefragt wurde. Schritt 158 setzt einen Zweisekundenzeitgeber und einen Umschwenk-(slew)-Zeitgeber und gibt ein SLEW-Bit frei. Durch das SLEW-Bit wird angezeigt, daß der Hebel 52 während der letzten 200 Millisekunden in einer der beiden Grenzlagen geblieben ist. Befindet sich der durch den Bedienungshebel 52 eingestellte Lagesollwert über dem durch den Lagewandler 60 erfaßten Lageistwert, dann richtet Schritt 160 den Algorithmus zu Schritt 162, durch den der Algorithmus auf Schritt 124 gelenkt wird, um ein FAILURE-Bit zu setzen, wenn der Bedienungshebel 52 in eine seiner Endlagen bewegt wurde (Prüfung des SLEW-Bits). Andernfalls richtet Schritt 162 den Algorithmus auf Schritt 166, welcher ein DOWN-Bit und ein LOKBIT-Bit setzt. Schritt 166 führt dann die Steuerung zum Hauptprogramm zurück, welches so reagiert, daß es die Anhängevorrichtung dann vor einer Bewegung entsprechend der Einstellung des Bedienungshebels 52 schützt, wenn sich der Wippschalter 80 in der unteren Stellung befindet und der Lagesollwert über dem Lageistwert liegt.

Wenn, ausgehend von Schritt 160, der durch den Bedienungshebel 52 geforderte Lagesollwert jedoch nicht über dem erfaßten Lageistwert liegt, dann richtet Schritt 160 den Algorithmus auf Schritt 164, welcher ein DOWN-Bit setzt. Wenn dann Schritt 168 feststellt, daß der Bedienungshebel 52 zu einer seiner Anschlagslagen bewegt wurde, richtet Schritt 168 den Algorithmus zu der Logik des Schrittes 124. Andernfalls richtet Schritt 168 den Algorithmus auf Schritt 170, welcher den LOKBIT-Bit freigibt (Löschmerkmal wird unwirksam), den Bedienungshebel 52 wirksam macht und die Steuerung zum Hauptprogramm zurückführt. Befindet sich also der Wippschalter 80 in seiner unteren Lage und liegt der Lagesollwert unter dem Lageistwert, so bewegt das Hauptprogramm die Anhängevorrichtung nach unten, in die durch den Bedienungshebel 52 geforderte Lage.

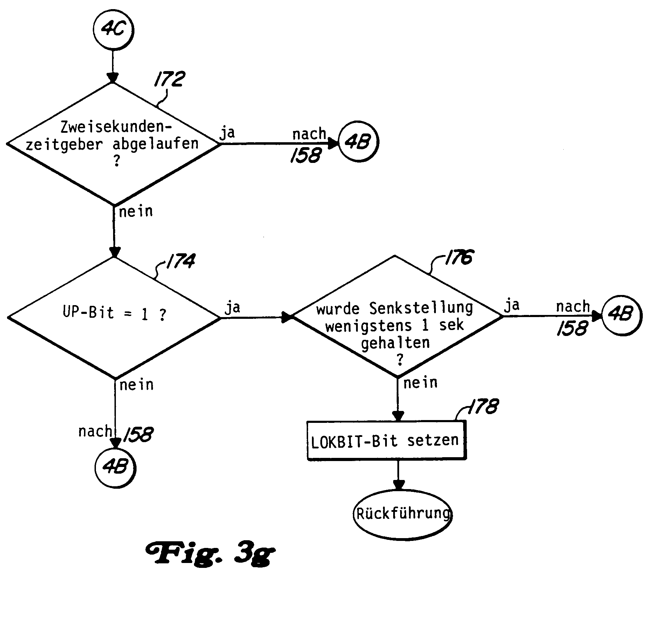

Ausgehend von Schritt 152 wird der Algorithmus auf Schritt 172 (Fig. 3g) gelenkt, wenn der Senkmodus nicht vorher ausgewählt war. Schritt 172 richtet den Algorithmus auf Schritt 158, wenn der in Schritt 106 zurückgestellte Zweisekundenzeitgeber abgelaufen ist. Dies bewirkt daher, daß der Senkmodus ausgewählt wird, ohne daß die vorhergehende Schalterauswahl geprüft wird, sofern mehr als zwei Sekunden seit der letzten Schalterbetätigung abgelaufen sind. Ist der Zweisekundenzeitgeber jedoch nicht abgelaufen, so richtet Schritt 172 den Algorithmus auf Schritt 174, durch welchen der Zustand eines UP-Bits geprüft wird, das anzeigt, daß der Wippschalter 80 sich vorher in der oberen Stellung befunden hat. Wurde kein UP-Bit gesetzt, so wird der Senkmodus gewählt und der Algorithmus schreitet zu Schritt 158 weiter. Wurde hingegen ein UP-Bit gesetzt, was bedeutet, daß der Wippschalter 80 vorher in seine obere Stellung und dann innerhalb von zwei Sekunden in seine untere Stellung gebracht wurde, so richtet Schritt 174 den Algorithmus auf Schritt 176, durch den bestimmt wird, ob der Wippschalter 80 in der unteren Stellung länger als eine Sekunde gehalten wurde. Ist dies der Fall, so veranlaßt Schritt 176 den Algorithmus zu Schritt 158 fortzuschreiten. Wird der Wippschalter 80 nicht mindestens zwei Sekunden in seiner unteren Stellung gehalten, so richtet Schritt 176 den Algorithmus auf Schritt 178, wo ein LOKBIT-Bit gesetzt und das Löschmerkmal aufgerufen wird.

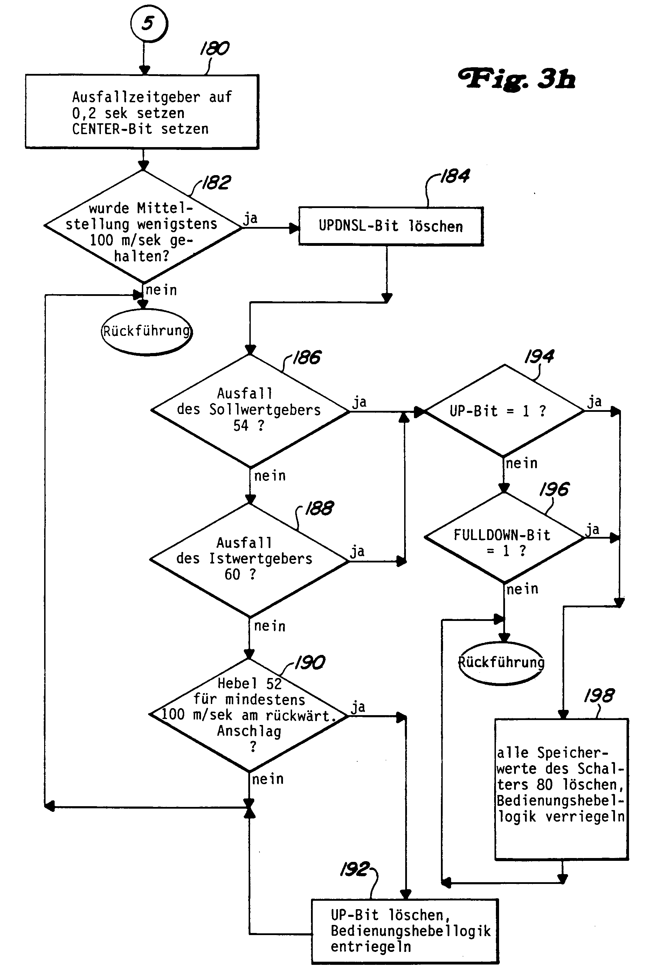

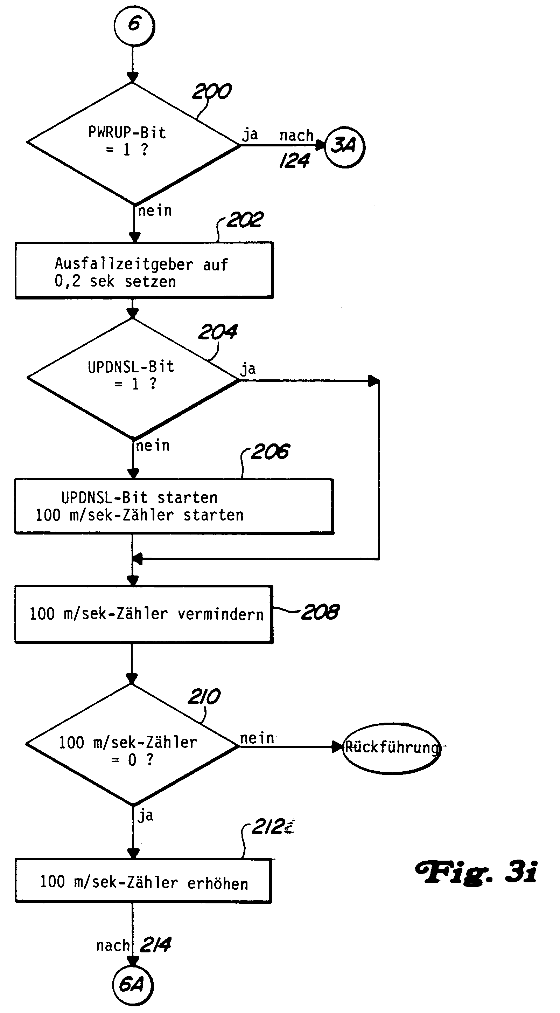

Schritt 118 in Fig. 3b richtet den Algorithmus auf Schritt 180 der Fig. 3h, wenn der Wippschalter 80 sich in seiner mittleren Stellung befindet. Schritt 180 setzt einen Ausfallzähler auf eine Zeitdauer von zwei Sekunden und ein CENTER-Bit, welches anzeigt, daß der Wippschalter 80 sich in der mittleren Stellung befindet. Der Algorithmus wird dann mit Schritt 182 fortgesetzt, welcher feststellt, ob sich der Wippschalter 80 in seiner mittleren Stellung mindestens für 100 Millisekunden befunden hat. Ist dies nicht der Fall, so kehrt der Algorithmus zum Hauptprogramm zurück. Andernfalls richtet Schritt 182 den Algorithmus auf Schritt 184. Schritt 184 löscht ein UPDNSL-Bit aus, wodurch angezeigt wird, daß sich der Wippschalter 80 länger als 100 Millisekunden in seiner mittleren Stellung befunden hat.

Die Schritte 186 und 188 lenken den Algorithmus auf Schritt 194, wenn an dem Bedienungshebel 52 und/oder an dem Lagerückkopplungssensor 60 ein Ausfall festgestellt wurde. Die Schritte 194 und 196 lenken den Algorithmus auf Schritt 198, wenn sich der Wippschalter 80 vor kurzem in der oberen Stellung oder vorher in der unteren Stellung befunden hat. Schritt 198 löscht alle Zustandsangaben des Wippschalters 80, ruft die Hebelverriegelungslogik auf, um eine Bewegung der Anhängevorrichtung 26 in Abhängigkeit einer Verstellung des Bedienungshebels 52 zu verhindern und führt den Algorithmus zum Hauptprogramm zurück. Befand sich der Wippschalter 80 jedoch vor kurzem weder in der oberen noch in der unteren Stellung, so führen die Schritte 194 und 196 die Steuerung direkt zum Hauptprogramm zurück.

Wurde weder durch Schritt 186 noch durch Schritt 188 ein Ausfall festgestellt, so schreitet der Algorithmus zu Schritt 190 fort. Durch Schritt 190 wird festgestellt, ob der Bedienungshebel 52 für wenigstens 100 Millisekunden ganz zurückgezogen (untere Lage) wurde. Falls dies zutrifft, schreitet der Algorithmus zu Schritt 192 fort, wo der UP-Modus gelöscht, die Hebellogik freigegeben (die Hebelverriegelungslogik wird unwirksam gemacht) und die Steuerung zu dem Hauptprogramm zurückgeführt wird. Wird Schritt 192 ausgeführt, so reagiert das Hauptprogramm damit, daß die Anhängevorrichtung 26 sich in Abhängigkeit einer Verstellung des Bedienungshebels 52 bewegt, so daß die Anhängevorrichtung 26 dem Bedienungshebel 52 folgt. Wurde jedoch der Bedienungshebel 52 nicht für 100 Millisekunden ganz zurtickgezogen, so führt Schritt 190 die Steuerung zum Hauptprogramm zurück, ohne daß der Bedienungshebel 52 entriegelt wird. Auf diese Weise reagiert das Hauptprogramm dadurch, daß es eine Bewegung der Anhängevorrichtung 26 so lange unterdrückt, bis der Bedienungshebel 52 ganz zurück oder bis zu einer Lage verstellt wird, die der Lage der Anhängevorrichtung 26 entspricht.

Schritt 120 in Fig. 3b richtet den Algorithmus zu Schritt 200 der Fig. 3i, wenn der Wippschalter 80 sich in seiner oberen Stellung befindet. Schritt 200 richtet den Algorithmus auf die Ausfallogik des Schrittes 124, wenn der Wippschalter 80 sich beim anfänglichen Einschalten des Systems in seiner oberen Stellung befand. Andernfalls schreitet der Algorithmus zu Schritt 202 weiter, durch den der Ausfallzeitgeber neu auf eine Zeitperiode von 0,2 Sekunden eingestellt wird. Schritt 204 lenkt dann den Algorithmus auf Schritt 208, sofern das UPDNSL-Bit vorher auf 1 gesetzt wurde, wodurch angezeigt ist, daß der Wippschalter 80 sich vorher in seiner oberen Stellung befunden hat. Andernfalls richtet Schritt 204 den Algorithmus auf Schritt 206, durch den das UPDNSL-Bit gesetzt wird, um anzuzeigen, daß dies das erste Mal ist, daß der Wippschalter 80 sich in seiner oberen Stellung befand. Ferner setzt Schritt 206 einen Zeitgeber auf 100 Millisekunden. Schritt 208 setzt den Zeitgeber schrittweise zurück. Dann führt Schritt 210 die Steuerung zum Hauptprogramm zurück, wenn der 100-Millisekunden-Zeitgeber noch nicht abgelaufen ist. Ist er hingegen abgelaufen, so richtet Schritt 210 den Algorithmus auf Schritt 212, durch welchen der Zeitgeber schrittweise heraufgesetzt wird, und dann auf Schritt 214. An dieser Stelle steht fest, daß der Wippschalter 80 sich für mindestens 100 Millisekunden in seiner oberen Stellung befunden hat.

Gemäß Fig. 3j richtet Schritt 214 den Algorithmus auf Schritt 220, sofern ein Ausfall des Hebelstellungswandlers 54 festgestellt wurde. Schritt 220 setzt das UP-Bit, entriegelt die Bedienungshebellogik, löscht die gespeicherten Zustände des Wippschalters 80 und führt die Steuerung zu dem Hauptprogramm zurück. Dies ermöglicht eine Betätigung der Anhängevorrichtung 26 durch Verkippen des Wippschalters 80 in eine seiner instabilen Stellungen. Liegt kein Ausfall des Hebelstellungswandlers 54 vor, so schreitet der Algorithmus zu Schritt 216 weiter, durch welchen geprüft wird, ob ein Ausfall des Lagerückkopplungssensors 60 vorlag. Ist dies der Fall, so schreitet der Algorithmus zu Schritt 218 weiter. Schritt 218 richtet dann wieder den Algorithmus auf Schritt 220, wenn der Bedienungshebel 52 nicht in eine seiner Endlagen bewegt wurde. Andernfalls richtet Schritt 218 den Algorithmus auf die Ausfallogik des Schrittes 124.

Wird durch Schritt 216 kein Ausfall festgestellt, so schreitet der Algorithmus zu Schritt 222 weiter, durch den festgestellt wird, ob vorher das LOKBIT-Bit gesetzt wurde. Dies erfolgte beispielsweise durch Schritt 248, der durchgeführt wird, wenn der Wippschalter 80 zunächst in seine obere und später in seine untere Stellung gebracht wurde. Wurde das LOKBIT-Bit auf 1 gesetzt, so richtet Schritt 222 den Algorithmus auf Schritt 224, in welchem festgestellt wird, ob dies das zweite Mal ist, daß der Wippschalter 80 in seine obere Stellung gebracht wurde. Ist dies der Fall, so schreitet der Algorithmus zu Schritt 226 weiter, durch den das LOKBIT-Bit und das UP-Bit gelöscht und die Steuerung auf Schritt 134 gerichtet werden. Zurückkehrend zu den Schritten 222 und 224 ist festzustellen, daß dann, wenn der Wippschalter 80 zum ersten Mal in seine obere Stellung gebracht wurde, nachdem er sich vorher in der unteren Stellung befunden hat, Schritt 224 den Algorithmus auf Schritt 230 lenkt. Bleibt der Wippschalter 80 für mindestens eine Sekunde in seiner oberen Lage, so richtet Schritt 230 ebenfalls den Algorithmus auf Schritt 226 und löscht das LOKBIT-Bit und das UP-Bit und leitet den Algorithmus auf Schritt 234. Hat sich hingegen der Wippschalter 80 nicht mindestens eine Sekunde lang in der oberen Stellung befunden, so kehrt der Algorithmus zum Hauptprogramm zurück. Ausgehend von Schritt 222 lenkt dieser den Algorithmus auf Schritt 228, wenn das LOKBIT-Bit vorher nicht gesetzt war. Schritt 228 bestimmt, ob das UP-Bit vorher gesetzt wurde.

Wurde das UP-Bit nicht gesetzt, so richtet Schritt 228 den Algorithmus auf Schritt 242 (Fig. 3l). Schritt 242 richtet den Algorithmus auf Schritt 244, wenn weniger als zwei Sekunden seit der letzten Schalterbetätigung vergangen sind. Schritt 244 stellt fest, ob das DOWN-Bit vorher gesetzt wurde, was bedeutet, daß der Wippschalter 80 sich in seiner unteren Stellung befunden hat, jedoch dann innerhalb der letzten zwei Sekunden in seine obere Stellung gebracht wurde. Trifft dies zu, so richtet Schritt 244 den Algorithmus auf Schritt 246. Hat sich der Wippschalter 80 weniger als eine Sekunde in seiner oberen Stellung befunden, so richtet Schritt 246 den Algorithmus auf Schritt 248, durch den das LOKBIT-Bit gesetzt wird, wodurch die Bedienungshebelverriegelungslogik aufgerufen wird und der Einfluß jeder früheren Betätigung des Wippschalters 80 gelöscht wird. Die Steuerung kehrt dann zum Hauptprogramm zurück. Blieb ausgehend von Schritt 246 der Wippschalter 80 jedoch für mehr als eine Sekunde in seiner oberen Stellung, so richtet Schritt 246 den Algorithmus auf Schritt 234 (Fig. 3k). Ausgehend von Schritt 244 (Fig. 3l) schreitet der Algorithmus wieder zu Schritt 234 weiter, wenn vorher das DOWN-Bit gesetzt wurde. Schritt 234 verzweigt sich nach Schritt 238, wenn das UP-Bit nicht gesetzt wurde. Schritt 238 setzt ein UP-Bit, stellt die Hebelverriegelungslogik ein und setzt die Verriegelungslage ganz nach oben, wodurch ein Anheben der Anhängevorrichtung ausgelöst wird.

Bezugnehmend auf Fig. 3k wird Schritt 234 durchgeführt, wenn der Wippschalter 80 in seiner oberen Stellung wenigstens für eine Sekunde gehalten wurde, wenn der Wippschalter 80 ein zweites Mal gekippt wurde oder wenn der Wippschalter 80 vorübergehend in seine obere Stellung bewegt wurde, ohne daß er vorher in der unteren Stellung war. Schritt 234 stellt fest, ob das UP-Bit vorher gesetzt wurde. Wurde das UP-Bit vorher nicht gesetzt, so schreitet der Algorithmus zu Schritt 238 weiter, durch den das UP-Bit gesetzt, der Zweisekundenzeitgeber für das Löschmerkmal gestartet und ein FDBKLC-Bit auf Null gesetzt wird. Dies bewirkt, daß durch das Hauptprogramm die Anhängevorrichtung ganz in die angehobene Lage bewegt wird. Schritt 238 ruft ferner die Hebelverriegelungslogik auf, welche verhindert, daß das Hauptprogramm die Anhängevorrichtung 26 in Abhängigkeit der Stellung des Bedienungshebels 52 verstellt. Schritt 238 lenkt dann den Algorithmus zu Schritt 240, welcher die verschiedenen Betriebswerte des Wippschalters 80 löscht und dann den Algorithmus zum Hauptprogramm zurückführt.

Zurückkehrend zu Schritt 234: wurde das UP-Bit durch eine frühere Ausführung des Schrittes 238 gesetzt, so richtet Schritt 234 im nächsten Durchlauf der Algorithmusschleife den Algorithmus auf Schritt 236. Wurde der Bedienungshebel 52 zu einer seiner Endlagen bewegt, so richtet Schritt 236 den Algorithmus auf die Ausfallogik des Schrittes 124. Wurde der Bedienungshebel 52 nicht in eine Endlage bewegt, so führt Schritt 236 die Steuerung auf das Hauptprogramm zurück.

Der hier beschriebene Algorithmus führt eine Reihe neuer und wünschenswerter Funktionen und Verhaltensweisen aus. Beispielsweise kann die Anhängevorrichtung 26 durch ein einziges zeitweises Verkippen des Wippschalters 80 nach oben angehoben und dann durch den Bedienungshebel 52 auf eine Arbeitsposition abgesenkt werden, ohne daß der Wippschalter 80 ein weiteres Mal betätigt zu werden braucht, da der Wippschalter 80 automatisch in seine mittlere Stellung zurückkehrt, wenn er losgelassen wird. Die Schritte 118 und 180-192 ermöglichen es, daß die Anhängevorrichtung in Abhängigkeit des Bedienungshebels 52 bewegt werden kann, wenn der Wippschalter 80 seine mittlere Stellung einnimmt und der Bedienungshebel 52 in seine ganz untere Stellung bewegt wurde. Die Schritte 174-178 und 244-248 bewirken ein Löschen des Einflusses einer früheren Betätigung des Wippschalters 80, sofern der Wippschalter 80 später, innerhalb von zwei Sekunden nach der ersten Betätigung in einer unterschiedlichen Weise betätigt wurde. Die Schritte 130-136 veranlassen das System, Schalterbetätigungen zu ignorieren, sofern diese nicht wenigstens für eine gewisse Zeitspanne bestanden haben. Die Schritte 122, 124, 166, 178, 198, 232, 238 und 248 bewirken, daß der Hebelverriegelungsmodus wirksam ist, der eine Bewegung der Anhängevorrichtung 26 in Abhängigkeit von einer Betätigung des Bedienungshebels 52 verhindert. Die Schritte 140-146 und 214-220 reagieren auf eine Ausfallbedingung und erlauben es, daß die Anhängevorrichtung 26 zu einer beliebigen gewünschten Lage durch Betätigung des Wippschalters 80 verstellt werden kann, wohingegen durch den Wippschalter 80 gewöhnlich die Anhängevorrichtung lediglich in ihre obere oder untere Extremlage bewegt werden kann.

## Patentansprüche

1. Steuersystem zur Einstellung der Lage einer Anhängevorrichtung (26), insbesondere eines Schleppers, mit Betätigungsmitteln (34) zum Anheben und Absenken der Anhängevorrichtung (26), mit einem Sensor (38, 60) zur Erfassung eines Lageistwertes der Anhängevorrichtung (26), mit einer durch eine Bedienungsperson einstellbaren Bedienungseinrichtung (52, 54) zur Einstellung eines Lagesollwertes für die Anhängevorrichtung (26), mit einem durch eine Bedienungsperson einstellbaren Eingabeschalter (80) und mit einer Steuereinheit (50), durch die eine Steuerung der Betätigungsmittel (34) wenigstens in Abhängigkeit des Lagesollwertes, des Lageistwertes und der Einstellung des Eingabeschalters (80) erfolgt, wobei die Steuereinheit (50) einerseits Mittel enthält, durch die die Anhängevorrichtung (26) bei einer bestimmten Betätigung des Eingabeschalters (80) nur in eine Grenzlage bewegbar ist und andererseits Mittel enthält, durch die abhängig vom Lagesollwert die Anhängevorrichtung (26) in eine Vielzahl erwünschter Arbeitspositionen einstellbar ist, gekennzeichnet durch Mittel, die auf eine Ausfallbedingung ansprechen und in Abhängigkeit einer Betätigung des Eingabeschalters (80) eine Bewegung der Anhängevorrichtung (26) in eine beliebige gewünschte Arbeitslage ermöglichen.

2. Steuersystem nach Anspruch 1, dadurch gekennzeichnet, daß der Eingabeschalter ein federzentrierter Schalter (80) mit wenigstens folgenden drei Stellungen ist: eine obere Hebestellung, die einem Anhebebetrieb zugeordnet ist, eine untere Arbeitsstellung, die einem gesteuerten Bodenbearbeitungsbetrieb zugeordnet ist, und eine mittlere Neutralstellung, die der Schalter (80) aufgrund der Federkraft einnimmt, sofern er nicht betätigt wird.

## Claims

1. A control system for adjusting the position of a hitch device (26), especially of a tractor, with actuating means (34) for raising and lowering the hitch device (26), a sensor (38, 60) for detecting the actual position value of the hitch device (26), an operating device (52, 54) adjustable by an operator to adjust a set-point position value for the hitch device (26), an input switch (80) adjustable by an operator and a control unit (50), through which control of the actuating means (34) is effected at least in dependence on the set-point position value, the actual position value and the setting of the input switch (80), wherein the control unit (50) includes on the one hand means through which the hitch device can be moved only into a limit position on a specific actuation of the input switch (80) and on the other hand means through which the hitch device (26) can be adjusted into a plurality of desired working positions dependent on the set-point position value, characterized by means which respond to a failure condition and, in dependence on an actuation of the input switch (80), make possible a movement of the hitch device (26) into an arbitrary desired working position.

2. A control system according to claim 1, characterized in that the input switch is a spring-centred switch (80) with at least the following three positions: an upper, raise position with which a raising operation is associated, a lower, working position with which a controlled ground working operation is associated, and middle, neutral position which the switch (80) assumes on account of the spring force, so long as it is not actuated.

## Revendications

1. Système de commande pour le réglage de la position d'un dispositif d'attelage (26) notamment d'un tracteur, comportant des moyens d'actionnement (34) pour soulever et abaisser le dispositif d'attelage (26), un capteur (38, 60) pour détecter une valeur réelle de position du dispositif d'attelage (26), un dispositif de commande (52, 54) réglable par un opérateur et servant à régler une valeur de consigne de position pour le dispositif d'attelage (26), un interrupteur d'entrée (80) réglable par un opérateur et une unité de commande (50), à l'aide de laquelle une commande des moyens d'actionnement (34) est réalisée au moins en fonction de la valeur de consigne de position, de la valeur réelle de position et du réglage de l'interrupteur d'entrée (80), l'unité de commande (50) contenant d'une part des moyens, à l'aide desquels le dispositif d'attelage (26) est déplaçable uniquement en direction d'une position limite, pour un actionnement déterminé de l'interrupteur d'entrée (80), et d'autre part des moyens, à l'aide desquels le dispositif d'attelage (26) est réglable en fonction de la valeur de consigne de position, dans une multiplicité de positions de travail désirées, caractérisé par des moyens, qui répondent à une condition de défaillance et permettent, en fonction de l'actionnement de l'interrupteur d'entrée (80), un déplacement du dispositif d'attelage (26) dans une position de travail désirée quelconque.

2. Système de commande selon la revendication 1, caractérisé en ce que l'interrupteur d'entrée est un interrupteur (80) centré par ressorts et possédant au moins les trois positions suivantes : une position haute de soulèvement, qui est associée à une opération de soulèvement, une position basse de travail, qui est associée à un traitement commandé du sol, et une position neutre médiane, que l'interrupteur (80) prend sous l'action de la force des ressorts, dans la mesure où il n'est pas actionné.
